# EUROPÄISCHE PATENTANMELDUNG

(11) **EP 4 366 059 A1**
(43) Veröffentlichungstag der Anmeldung: **08.05.2024**
(21) Anmeldenummer: 23020406.7
(22) Anmeldetag: 31.08.2023
(51) Int. Cl.: H01M 50/242, H01M 50/238, H01M 50/293, H01M 10/04

(54) **KOMPRESSIONSPAD MIT FORMGEDÄCHTNISFUNKTION UND HERSTELLUNGSVERFAHREN DAFÜR**

(30) Priorität: 02.11.2022 DE 102022128911
(71) Anmelder: Dr. Ing. h.c. F. Porsche Aktiengesellschaft, 70435 Stuttgart (DE)
(72) Erfinder: Grass, Dominik, 74321 Bietigheim-Bissingen (DE)

(57) **Zusammenfassung**

In verschiedenen Ausführungsformen wird ein Kompressionspad (1) mit einer Formgedächtnisfunktion für einen Batteriezellstapel (5) bereitgestellt mit einen Innenraum, in welchem ein Füllmaterial vorliegt, wobei der Innenraum zusätzlich mit einem Medium (2) gefüllt ist oder das Medium (2) in das Füllmaterial eingearbeitet ist, wobei das Medium (2) Kraft seiner Festigkeit das Kompressionspad (1) in einer komprimierten Form hält gegenüber einer Form, die das Kompressionspad (1) ohne das Medium (2) einnehmen würde. Ferner werden Verfahren zum Herstellen eines Kompressionspads (1) mit Formgedächtnisfunktion sowie eines Batteriezellmoduls (8) bereitgestellt.

## Beschreibung

Die vorliegende Erfindung betrifft ein Kompressionspad mit einer Formgedächtnisfunktion, insbesondere zur Verwendung in einem Batteriezellstapel (Batteriezellpaket). Ferner betrifft die Erfindung ein Herstellungsverfahren für ein solches Kompressionspad sowie zusätzlich für einen Batteriezellstapel, welcher Kompressionspads mit der Formgedächtnisfunktion aufweist.

Die Reichweite von Elektrofahrzeugen wird maßgeblich durch die darin verbaute Traktionsbatterie bestimmt. Zum Antrieb moderner Elektrofahrzeuge werden heutzutage geeignet dimensionierte Hochvoltbatterien verwendet, die aus Batteriezellmodulen (auch als Batteriemodule bezeichnet) aufgebaut sind, wovon jedes wiederum eine Anzahl von Batteriezellen beinhaltet, wovon jede die kleinste für sich abgeschlossene Energiespeicherzelle darstellt. So umfasst beispielsweise die zweilagige Performance-Batterie Plus, welche in einigen Porsche Taycan Modellen eingesetzt wird, 33 Zellmodule, die je aus zwölf einzelnen Batteriezellen bestehen. Damit weist die Traktionsbatterie insgesamt 396 Batteriezellen aufweist, wobei als Batteriezellen Lithium-Ionen-Akkumulatoren zum Einsatz kommen. Die Traktionsbatterie weist eine Systemspannung von 800 Volt und eine Gesamtkapazität von 93,4 kWh auf.

Zum Aufbau der Batterien werden grundsätzlich Batteriemodule verwendet, in denen eine Anzahl von mehreren Zellen parallel angeordnet ist, wobei zwischen je zwei Zellen ein Kompressionspad (auch als Kompressionseinlage bezeichnet) angeordnet ist. Die zwischen den Batteriezellen angeordneten Kompressionspads erfüllen eine weitere wichtige Aufgabe, nämlich die Bereitstellung eines Ausgleichs für die anwachsenden Zelldicken (Swelling). Beim Swelling handelt es sich um eine Volumenänderung einer Batteriezelle, insbesondere einer Lithium-Ionen-Zelle, welche einerseits beim Laden und Entladen beobachtet werden kann und andererseits auf einer langsameren Zeitskala durch Alterung der Batteriezelle bedingt ist. Swelling wird durch eine Strukturänderung der Aktivschichten innerhalb der Batteriezelle bewirkt, die durch die darin stattfindende Umlagerung von Lithium-Ionen bedingt ist. Besonders ausgeprägt ist Swelling bei Pouch-Zellen, einer weit verbreiteten Bauform von Batteriezellen. Durch das soeben erwähnte Anordnen von Kompressionspads zwischen die Batteriezellen in deren Stapelrichtung, können diese durch Kompression die Volumenänderung der Batteriezellen innerhalb eines Batteriemoduls ausgleichen.

Zusätzlich können mittels der komprimierbaren Pads Kräfte im Batteriezellpaket aufgebaut werden, wodurch dieses im Gehäuse (Batterie- oder Modulgehäuse) verspannt werden kann. Um eine gute Vorspannung zu erreichen unterscheidet sich das Außenmaß des Batteriezellpakets üblicherweise nur unwesentlich von dem Innenmaß des Gehäuses. Als Kompressionspads werden aktuell reine Schaum-Pads verwendet, welche sich stark komprimieren lassen. Daher wird das Batteriezellpaket beim Einbau überdrückt, um seine Dimension temporär zu verkleinern, und in diesem überdrückten Zustand in das Gehäuse eingeschoben, was den Vorgang des Einschiebens des Batteriezellstapels verkompliziert und dadurch prozessseitig relativ aufwendig macht. Der Einschiebevorgang findet dann unter bestimmten Einschubkräften Statt, da sich das Batteriezellpaket beim Einschieben von Innen an die Innenseiten des Gehäuses presst und es somit zu Reibkräften kommt, durch welche entweder die Batteriezellen oder die Kompressionspads unter Umständen beschädigt werden können.

Druckschrift US 2014/141307 A1 offenbart eine Batterie mit einem Batteriegehäuse und mehreren, nebeneinander angeordneten Batteriezellen, wobei zwischen jeweils zwei benachbarten Batteriezellen ein Schaum-Kompressionspad angeordnet ist, welches beim Montagevorgang komprimiert ist und nach der Montage expandiert ist.

Druckschrift EP 3893291 A1 offenbart eine Batterie mit mehreren Batteriezellen und mehreren, zwischen zwei zueinander benachbarten Batteriezellen angeordneten Kompressions- sowie Wärmeschutzpads, wobei die Kompressionspads mit steigender Temperatur schrumpfen.

In Druckschrift EP 2475040 A1 ist ein Batteriezellpaket bekannt, wobei mehrere Batteriezellen zwischen zwei Abschlusselementen verpresst sind, und wobei zwischen den Abschlusselementen und den Batteriezellen ein Druckkissen angeordnet ist.

Ausgehend von den aus dem Stand der Technik bekannten Kompressionspads und Montageverfahren von Batteriezellstapeln in Gehäusen kann die Aufgabe der vorliegenden Erfindung darin gesehen werden, Kompressionspads sowie ein entsprechendes Herstellungsverfahren bereitzustellen, welche den Montagevorgang erleichtern.

Diese Aufgabe wird mittels der Gegenstände der unabhängigen Patentansprüche gelöst. Weitere bevorzugte Ausführungsformen finden sich in den abhängigen Patentansprüchen.

Die vorliegende Erfindung basiert auf einer im Vorfeld der Ausbildung des Batteriezellstapels erfolgenden Verpressung der Kompressionspads auf ein definiertes Maß. Dieses verpresste bzw. zusammengedrückte Maß wird durch die Haltekraft eines zusätzlichen Mediums bzw. Materials fixiert und insbesondere beim Ausbilden des Batteriezellstapels und dessen Montage im Gehäuse beibehalten. Das definierte Maß der verpressten Kompressionspads wird dabei so gewählt, dass der gebildete Batteriezellstapel hinsichtlich des dafür im Gehäuse vorgesehenen Bauraums ein Untermaß aufweist und somit einfacher in das Gehäuse eingeschoben werden kann. Später im Gehäuse expandiert bzw. entfaltet sich das Kompressionspad auf und baut die gewünschten Verpresskräfte auf die Batteriezellen auf, um diese im Gehäuse zu fixieren.

Das Stabilisieren bzw. "Einfrieren" des verpressten Zustands des Kompressionspads dadurch erreicht, dass in dem Kompressionspad mit einem Medium gefüllt oder getränkt wird oder das Medium als Zusatzstoff in das Füllmaterial des Kompressionspads eingearbeitet wird. Im ersten Fall kann es sich bei dem Medium um das Kühlmedium eines Flüssigkühlsystems einer Batterie handeln, insbesondere einer Batterie mit Direktkühlung, bei der die Batteriemodule direkt vom Kühlmedium im Inneren des Gehäuses umströmt werden. Dieses Medium wird bei einer bestimmten Temperatur, die unterhalb der Betriebstemperatur des Batteriezellstapels liegt während seines bestimmungsgemäßen Gebrauchs in einer Batterie, hart oder sehr zäh. Bei höheren Temperaturen und insbesondere bei einer Temperatur im Bereich der Betriebstemperatur des Batteriezellstapels ist das Medium hingegen weich oder flüssig. Anders ausgedrückt ist bei dieser Temperatur seine Festigkeit kleiner.

Um das Kompressionspad mit Formgedächtnisfunktion bereitzustellen wird es mitsamt dem Medium auf eine vorbestimmte, z.B. eine minimale Dicke verpresst und in diesem Zustand heruntergekühlt, sodass das dadurch hart oder zäh werdende Medium das Kompressionspad in diesem Zustand hält. In diesem autark verpressten, also ohne weitere externe Kräfte anhaltenden Zustand wird das Kompressionspad in den Batteriezellstapel verbaut. Dadurch hat der Batteriezellstapel ein Untermaß und kann einfacher, insbesondere ohne ein auf den Batteriezellstapel Druck aufbauendes Werkzeug, in ein Batteriemodul- oder Batteriegehäuse eingeschoben werden.

Hierbei kann der erforderliche Temperaturhub, je nach gewähltem Medium, entweder von einer über der Raumtemperatur liegenden Temperatur (beispielsweise eine Temperatur im Bereich der Betriebstemperatur des Batteriezellstapels) auf Raumtemperatur oder auf eine darunter liegende Temperatur erfolgen, oder aber auch von einer Temperatur im Bereich der Raumtemperatur auf eine Temperatur unterhalb der Raumtemperatur.

Die Formgedächtnisfunktion der erfindungsgemäßen Kompressionspads kommt zum Tragen, wenn es zu einer Erwärmung der im verpressten Zustand durch das Medium stabilisierten Kompressionspads auf eine Temperatur kommt, bei der das Medium erweicht oder sich verflüssigt und seine Haltekraft abnimmt. Ab einer bestimmten Temperatur werden die Ausdehnungskräfte des Füllmaterials im Kompressionspad größer, wodurch es sich wieder gemäß seinem Formgedächtnis ausdehnt. Die sich ausdehnenden Kompressionspads verpressen die Batteriezellen im Batteriemodul- oder Batteriegehäuse, wodurch der Montageschritt abgeschlossen wird.

Der Wirkmechanismus der vorliegenden Erfindung kann auf Basis eines Schwamms als Kompressionspad und Wasser als Medium veranschaulicht werden. Zum Herstellen eines Schwamms mit Formgedächtnisfunktion wird dieser zunächst mit Wasser gefüllt/getränkt, zusammengepresst und eingefroren. Nach Abschluss des Gefrierprozesses wird der zusammengepresste Schwamm seine Form beibehalten, solange das Wasser im Schwamm gefroren ist dünn. Der gefrorene Schwamm wird sodann in ein Gehäuse an seinen Einbauort geschoben. Da der Schwamm ein Untermaß aufweist, gelingt sein Einbringen ins Gehäuse problemlos und links und rechts vom Schwamm existiert ein Spalt zur Innenwand des Gehäuses. Der Schwamm taut aufgrund der höheren umgebenden Raumtemperatur auf und versucht seine ursprüngliche Form wieder zu erreichen. Dadurch breitet er sich aus und presst sich von innen an die Innenwände des Gehäuses.

Erfindungsgemäß wird folglich zunächst ein Kompressionspad mit einer Formgedächtnisfunktion für einen Batteriezellstapel bereitgestellt, welches einen Innenraum aufweist, in welchem ein Füllmaterial vorliegt, wobei der Innenraum zusätzlich mit einem Medium gefüllt ist oder das Medium in das Füllmaterial eingearbeitet ist, wobei das Medium Kraft seiner Festigkeit das Kompressionspad in einer komprimierten Form hält gegenüber einer Form, die das Kompressionspad ohne das Medium einnehmen würde. Der hier beschriebene Zustand des Kompressionspads entspricht folglich dem verpressten Zustand, welcher mittels des sozusagen unterkühlten Mediums fixiert wird.

Gemäß weiteren Ausführungsformen des Kompressionspads kann das Füllmaterial elastisch sein. Das Füllmaterial kann beispielsweise einen Kunststoff aufweisen, etwa einen geschäumten Kunststoff.

Gemäß weiteren Ausführungsformen des Kompressionspads kann das Medium ein Kühlmedium eines Flüssigkühlsystems einer Batterie aufweisen. Bei dem Kühlmedium kann es sich um eine elektrisch nichtleitende Flüssigkeit handeln mit ansonsten für ein Kühlmedium geeigneten Eigenschaften (Wärmekapazität, Viskosität, Flammpunkt). Bei Verwendung eines Kühlmediums als Medium kann es sich zweckmäßigerweise um das gleiche Kühlmedium handeln, welches in dem Elektrofahrzeug im Kühlsystem verwendet wird, da dieses nach Verbau und dem späteren Verpressen aus dem Füllmaterial in seine Umgebung und damit in das Kühlmedium der Batterie freigesetzt wird. Dadurch lassen sich unerwünschte Verunreinigungen des im Kühlkreislauf des Elektrofahrzeugs zirkulierenden Kühlmediums durch andere Flüssigkeiten vermeiden, was beispielsweise auftreten kann, wenn ein davon abweichendes Kühlmedium indem Innenraum des Kompressionspads vorliegen würde.

Erfindungsgemäß wird ferner ein Verfahren zum Herstellen eines Kompressionspads mit Formgedächtnisfunktion für einen Batteriezellstapel bereitgestellt. Dabei weist das Verfahren zunächst Einbringen eines Mediums in ein Kompressionspad ein. Das Einbringen des Mediums kann ein Einfüllen des Mediums in das Kompressionspad oder Tränken des Kompressionspads mit dem Medium aufweisen. Alternativ kann der Schritt auch Einarbeiten des Mediums in Form eines Zusatzstoffes in das Kompressionspad, beispielsweise in dessen Füllmaterial aufweisen.

In einem nächsten Schritt weist das erfindungsgemäße Herstellungsverfahren Komprimieren bzw. Verpressen des mit dem Medium gefüllten Kompressionspads auf. Hierbei wird das Kompressionspad auf eine Solldimension gebracht, beispielsweise hinsichtlich seiner Ausdehnung entlang der Stapelrichtung von Batteriezellen in dem Batteriezellstapel.

In einem weiteren Schritt weist das erfindungsgemäße Verfahren Abkühlen des komprimierten Kompressionspads auf eine Temperatur auf, welche bewirkt, dass das heruntergekühlte Medium in der Lage ist, das Kompressionspad in seiner komprimierten Form zu halten, wenn keine äußeren Kräfte darauf einwirken. Mit anderen Worten führt die Abkühlung des sich in dem Kompressionspad befindenden Mediums zu einer Veränderung seiner Materialeigenschaften in Richtung einer erhöhten Haltekraft. Hierbei kann das Medium so hart bzw. zäh werden, dass seine Haltekraft die Ausdehnungskraft des Füllmaterials des Kompressionspads übersteigt, wodurch es in der verpressten Form verbleibt.

Das Medium kann auch als Kältespeicher verwendet werden, wodurch sich das Kompressionspad langsamer aufwärmen kann und so die Zeit bis zum Ausdehnen des Kompressionspads verlängert werden kann. So kann es beispielsweise vorkommen, dass ein Kompressionspad verpresst und eingefroren wird, es sich aber aufgrund der geringen thermischen Masse sehr schnell durch die Umgebungstemperatur aufwärmt und ausdehnt, und zwar bevor es in Endlage verbaut werden kann. Wird dieses Kompressionspad nun vorab in einem Kühlmedium getränkt, kann so seine thermische Masse erhöht werden. Dadurch kann wiederum die Zeit verlängert werden, bis sich das Kompressionspad erwärmt und ausdehnt.

Gemäß weiteren Ausführungsformen des erfindungsgemäßen Herstellungsverfahrens kann das Medium ein Kühlmedium eines Flüssigkühlsystems einer Batterie aufweisen.

Gemäß weiteren Ausführungsformen des erfindungsgemäßen Herstellungsverfahrens kann es sich bei dem Medium um einen Zusatzstoff handeln, welcher in das Innere des Kompressionspads eingearbeitet ist. Der Zusatzstoff kann also bei der Herstellung des Füllmaterials der Kompressionspads oder der Kompressionspads selbst eingearbeitet werden.

Gemäß weiteren Ausführungsformen des erfindungsgemäßen Herstellungsverfahrens kann die Temperatur, auf die das Kompressionspad abgekühlt wird, unterhalb einer Betriebstemperatur des Batteriezellstapels liegen.

Erfindungsgemäß wird ferner ein Verfahren zum Herstellen eines Batteriezellmoduls bereitgestellt auf Basis eines Batteriezellstapels, in welchem die erfindungsgemäßen Kompressionspads verbaut sind. Das Verfahren weist zunächst Bereitstellen eines Batteriezellpakets auf, welches eine Anordnung von Batteriezellen aufweist, wobei zwischen je zwei Batteriezellen ein Kompressionspad angeordnet ist, welches gemäß einer Ausführungsform des zuvor beschriebenen Verfahrens zum Herstellen eines erfindungsgemäßen Kompressionspads hergestellt worden ist.

Das Verfahren weist ferner Einbringen des Batteriezellpakets in ein Gehäuse auf, wobei das Batteriezellpaket hinsichtlich des dafür im Gehäuse vorgesehenen Bauraums ein Untermaß aufweist.

Gemäß weiteren Ausführungsformen des erfindungsgemäßen Herstellungsverfahrens kann dieses ferner Erwärmen der Kompressionspads auf eine Temperatur aufweisen, die bewirkt, dass das Medium nicht mehr in der Lage ist, das Kompressionspad in seiner komprimierten Form zu halten. Mit anderen Worten kann das erfindungsgemäße Verfahren ein Expandieren der Kompressionspads aufweisen durch Zuführen von Wärme, wodurch die Festigkeit des Mediums reduziert wird.

Gemäß weiteren Ausführungsformen des erfindungsgemäßen Herstellungsverfahrens kann das Erwärmen der Kompressionspads mittels eines durch das Batteriezellmodul strömenden Fluides (Flüssigkeit oder Gas) hervorgerufen werden. Hierfür kann beispielsweise bei Montage der Batteriezellen in das Batteriezellmoduls z.B. mittels warmer Luft geschehen, die durch das Batteriezellmodul geleitet wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnungen.
Figuren 1A-1C veranschaulichen ein Ausführungsbeispiel des erfindungsgemäßen Verfahrens zum Herstellen eines Kompressionspads mit Formgedächtnisfunktion.
Figuren 2A-2C veranschaulichen ein Ausführungsbeispiel des erfindungsgemäßen Verfahrens zum Herstellen eines Batteriezellmoduls.

Das Verfahren zum Herstellen eines Kompressionspads mit Formgedächtnisfunktion beginnt mit dem Bereitstellen eines geeigneten Kompressionspads 1. In diesem ist entweder ein in einer späteren Phase des Verfahrens Zusammenhaltekraft bereitstellendes Medium 2 bereits eingearbeitet oder das Kompressionspad 1 wird mit diesem Medium 2 befüllt bzw. durchtränkt.

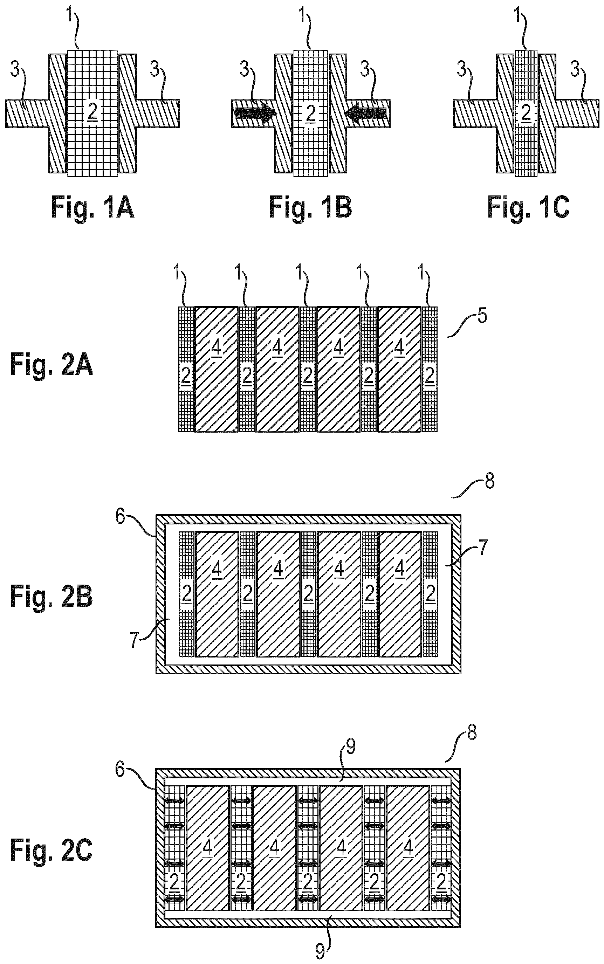

In Figur 1A ist der Beginn der Verpressung gezeigt. Hierzu kann das das Medium 2 aufweisende Kompressionspad 1 zwischen zwei Pressarme 3 einer Presse angeordnet werden. In Figur 1B erfolgt ein Zusammenpressen des Kompressionspads 1 auf ein gewünschtes Maß. In Figur 1C erfolgt eine Temperaturabsenkung, während das Kompressionspad 1 in einem verpressten Zustand verbleibt. Durch den Wärmeentzug ändern sich die Materialeigenschaften des Mediums 2, so dass es zäher bzw. fester wird und eine Haltekraft ausübt, welche der Ausdehnungskraft des Kompressionspads 1 zu seiner ursprünglichen Dimension (Fig. 1A) entgegenwirkt und diese ab einer bestimmten Temperatur übersteigt. Wenn ein stabiler Zustand erreicht ist, bei dem das Kompressionspad 1 Kraft des dieses zusammenhaltenden Mediums 2 in seinem verpressten Zustand verbleibt, ist der Herstellungsvorgang abgeschlossen und das verpresste Kompressionspad 1 kann entnommen werden.

Das verpresste Kompressionspad 1 kann anschließen zum Herstellen eins Batteriezellmoduls bzw. einer Batterie verwendet werden, was in den Figuren 2A-2C veranschaulicht ist. In Figur 2A wird zunächst ein Batteriezellstapel 5 aufgebaut, welcher im skizzierten Beispiel vier Batteriezellen 4 aufweist, wobei lateral an jeder Batteriezelle 4 ein verpresstes Kompressionspad 1 anliegt. Hierbei können die Batteriezellen 4 mit den Kompressionspads 1 beispielsweise verklebt werden oder von einer temporär Halt gebenden Struktur, etwa einer netzartigen Ummantelung, umgeben sein. In Figur 2B ist der Montageschritt gezeigt veranschaulicht, bei dem der Batteriezellstapel 5 in ein Gehäuse 6 eingeschoben wird, um das Batteriezellmodul 8 bzw. die Batterie auszubilden. Da der Batteriezellstapel 5 ein Untermaß aufweist, kann er sehr einfach, insbesondere ohne Reibekräfte zwischen dem Batteriezellstapel 5 und den Seitenwänden des Gehäuses 6 in dieses eingeschoben werden. In der Montagephase ist zwischen dem Batteriezellstapel 5 und den Seitenwänden des Gehäuses 6 ein Spalt 7. Nachdem der Batteriezellstapel 5 ins Gehäuse 6 eingebracht worden ist, erfolgt ein Expansionsschritt der Kompressionspads 1. Hierbei erwärmen sich die Kompressionspads, entweder passiv durch die Raumtemperatur oder aktiv, indem ein Fluid durch die Kühlkanäle 9 geströmt wird, beispielsweise das Kühlfluid des Flüssigkühlsystems des Batteriemoduls 8. Durch das Erwärmen ändern sich die Materialeigenschaften des Mediums 2 so, dass seine Haltekraft nachlässt und die Ausdehnungskräfte des Kompressionspads 1 überwiegen. Dadurch dehnen sich die verpressten bzw. zusammengedrückten Kompressionspads 1 aus und verpressen ihrerseits zugleich die Batteriezellen 2 innerhalb des Gehäuses 6 (Spalt 7 verschwindet).

Der Vorgang, bei dem das Medium 2 durch Erwärmen seine Haltekraft verliert, so dass das verpresste Kompressionspad 1 sich zu seinem ursprünglichen Zustand ausdehnen kann, kann durch unterschiedliche Prozesse eingeleitet werden, etwa durch, Erweichen, Schmelzen oder Resublimieren.

## Patentansprüche

1. Kompressionspad (1) mit einer Formgedächtnisfunktion für einen Batteriezellstapel (5), aufweisend:
einen Innenraum, in welchem ein Füllmaterial vorliegt;
wobei der Innenraum zusätzlich mit einem Medium (2) gefüllt ist oder das Medium (2) in das Füllmaterial eingearbeitet ist, wobei das Medium (2) Kraft seiner Festigkeit das Kompressionspad (1) in einer komprimierten Form hält gegenüber einer Form, die das Kompressionspad (1) ohne das Medium (2) einnehmen würde.

2. Kompressionspad (3) gemäß Anspruch 1,
wobei das Füllmaterial elastisch ist.

3. Kompressionspad gemäß Anspruch 1 oder 2,
wobei das Medium (2) ein Kühlmedium eines Flüssigkühlsystems einer Batterie aufweist.

4. Verfahren zum Herstellen eines Kompressionspads (1) mit Formgedächtnisfunktion für einen Batteriezellstapel (5), aufweisend die Schritte:
Einbringen eines Mediums (2) in ein Kompressionspad (1);
Komprimieren des mit dem Medium (2) gefüllten Kompressionspads (1);
Abkühlen des komprimierten Kompressionspads (1) auf eine Temperatur, welche bewirkt, dass das heruntergekühlte Medium (2) in der Lage ist, das Kompressionspad (1) in seiner komprimierten Form zu halten, wenn keine äußeren Kräfte darauf einwirken.

5. Verfahren gemäß Anspruch 4,
wobei das Medium (2) ein Kühlmedium eines Flüssigkühlsystems einer Batterie aufweist.

6. Verfahren gemäß Anspruch 4,
wobei es sich bei dem Medium (2) um einen Zusatzstoff handelt, welcher in das Innere des Kompressionspads (1) eingearbeitet ist.

7. Verfahren gemäß einem der Ansprüche 4 bis 6,
wobei die Temperatur unterhalb einer Betriebstemperatur des Batteriezellstapels (5) liegt.

8. Verfahren zum Herstellen eines Batteriezellmoduls (8), aufweisend die Schritte:
Bereitstellen eines Batteriezellpakets (5), welches eine Anordnung von Batteriezellen (4) aufweist, wobei zwischen je zwei Batteriezellen (4) ein Kompressionspad (1) angeordnet ist, welches gemäß dem Verfahren nach einem der vorangehenden Ansprüche hergestellt worden ist;
Einbringen des Batteriezellpakets (5) in ein Gehäuse (6), wobei das Batteriezellpaket (5) hinsichtlich des dafür im Gehäuse (6) vorgesehenen Bauraums ein Untermaß aufweist.

9. Verfahren gemäß Anspruch 8, ferner aufweisend:
Erwärmen der Kompressionspads (1) auf eine Temperatur, die bewirkt, dass das Medium (2) nicht mehr in der Lage ist, das Kompressionspad (1) in seiner komprimierten Form zu halten.

10. Verfahren gemäß Anspruch 8 oder 9,
wobei das Erwärmen der Kompressionspads (1) mittels eines durch das Batteriezellmodul (8) strömenden Fluides hervorgerufen wird.
